# EUROPÄISCHE PATENTSCHRIFT

(11) **EP 0 780 246 B1**
(45) Veröffentlichungstag und Bekanntmachung des Hinweises auf die Patenterteilung: **23.05.2001**
(21) Anmeldenummer: 96120690.1
(22) Anmeldetag: 20.12.1996
(51) Int. Cl.: B60C 11/00, B60C 11/11

(54) **Radialreifen**
Radial tyre
Bandage pneumatique radial

(30) Priorität: 23.12.1995 DE 19548731
(43) Veröffentlichungstag der Anmeldung: 25.06.1997
(73) Patentinhaber: Continental Aktiengesellschaft, 30165 Hannover (DE)
(72) Erfinder: Gauterin, Frank, Dr., 31535 Neustadt/Rbge (DE); Trabandt, Hagen, 31319 Sehnde (DE); Dodt, Thomas, Dr., 30455 Hannover (DE); Grave, Ludger, 30177 Hannover (DE)

(56) Entgegenhaltungen:
- EP-A- 0 434 967
- EP-A- 0 613 794
- EP-A- 0 625 435
- GB-A- 736 068
- GB-A- 738 143
- GB-A- 2 014 091
- PATENT ABSTRACTS OF JAPAN vol. 010, no. 301 (M-525), 14.Oktober 1986 & JP 61 115704 A (SUMITOMO RUBBER IND LTD), 3.Juni 1986,

## Beschreibung

Die vorliegende Erfindung betrifft einen Radialreifen, insbesondere für die Antriebsräder von Lastkraftwagen oder Bussen, mit einem Laufstreifenprofil gemäß dem Oberbegriff des Anspruches 1

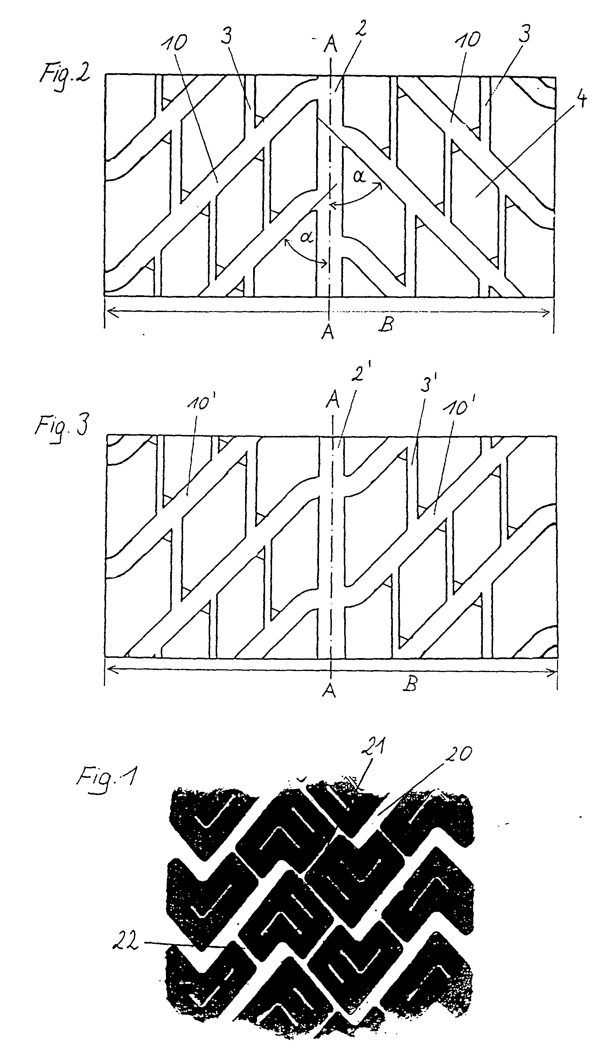

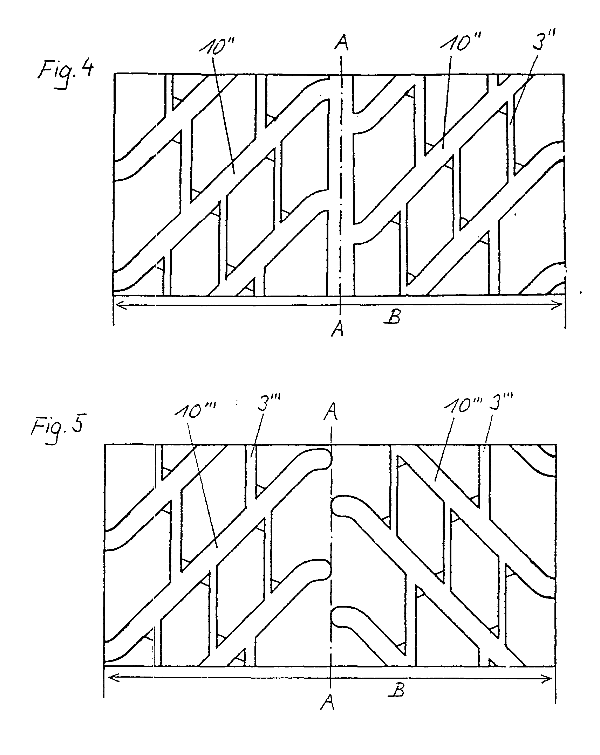

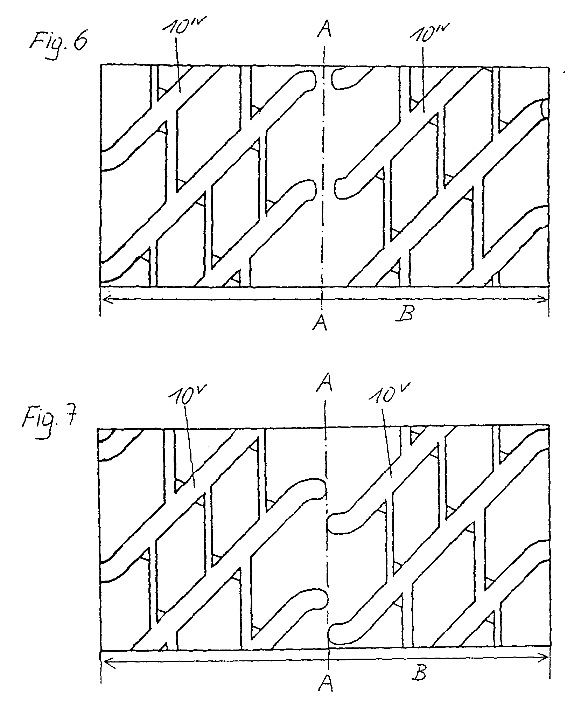

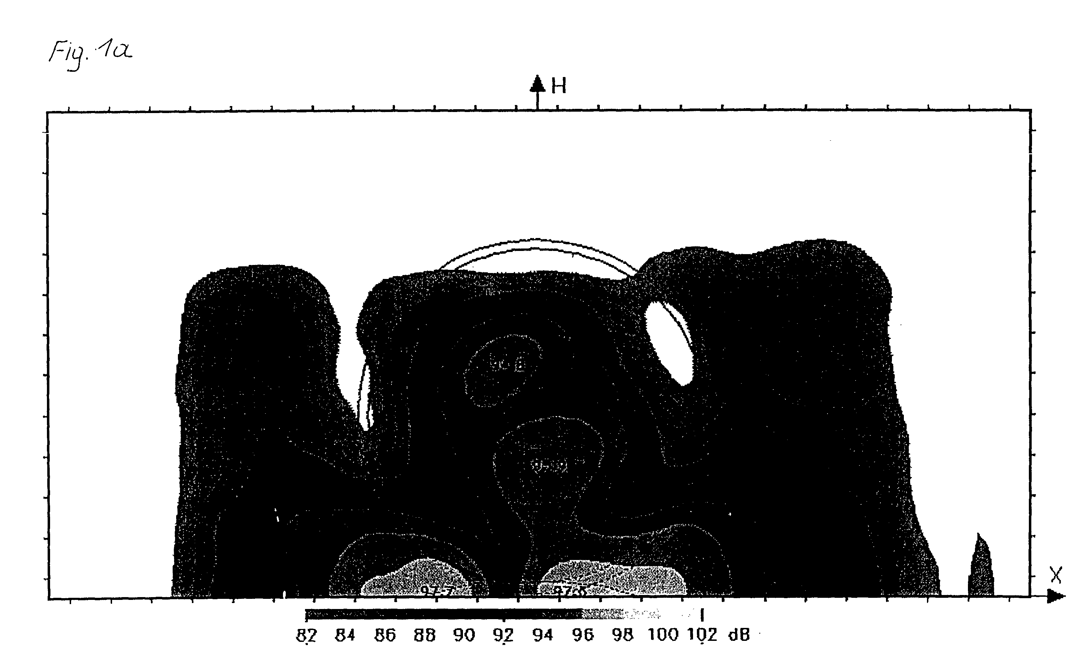

Radialreifen, die insbesondere für die Antriebsräder von Lastkraftwagen geeignet sind, weisen im allgemeinen ein Laufstreifenprofil mit einer ausgeprägten Klotzstruktur auf. Einer dieser bekannten LKW-Reifen, der beispielsweise auch in der AT-B-394 337 beschrieben ist, besitzt ein Laufstreifenprofil, welches sich im wesentlichen aus einer zentralen, entlang der Reifenäquatorlinie verlaufenden Klotzreihe, zwei mittleren und je einer schulterseitig verlaufenden Klotzreihe zusammensetzt, die durch in Umfangsrichtung verlaufende Umfangsnuten voneinander getrennt sind. Die Klötze in den einzelnen Klotzreihen sind durch gegenüber der Umfangsrichtung geneigt verlaufenden Querrillen voneinander getrennt. Ein weiteres typisches Traktionsprofil eines aus dem Stand der Technik bekannten LKW-Reifens zeigt Fig. 1, wo der verkleinerte Latschabdruck dieses Reifens dargestellt ist. Dieses Profil besitzt vier Klotzreihen, wobei die Klötze durch die Ausbildung von schräg über die Lauffläche verlaufenden breiten Rillen 20 sowie durch gleichsinnig schräg verlaufende schmale Rillen 21 und zu diesen gegensinnig verlaufenden schmalen Rillen 22 eine etwa V-förmige Grundgestalt besitzen.

Ein Reifen mit einem Laufstreifenprofil der eingangs genannten Art ist aus der GB-A-738 143 bekannt. Hier geht es vor allem darum, die Griffeigenschaften eines Profils in seitlicher Richtung und in Umfangsrichtung zu verbessern, wobei auch die Geräuschentwicklung und das Abriebsverhalten beachtet werden sollen. Bei einer der dargestellten und beschriebenen Ausführungsformen sind im Mittelbereich des Laufstreifens zwei Klotzreihen, deren in Umfangsrichtung benachbarte Klötze jeweils durch in Querrichtung verlaufende Rillen voneinander getrennt sind, und in jedem seitlichen Bereich eine weitere Klotzreihe, deren Klötze durch diagonal verlaufende Rillen voneinander getrennt sind, angeordnet. Die diagonal verlaufenden Rillen schließen mit der Reifenumfangsrichtung einen Winkel von 45 bis 70° ein.

Die in den letzten Jahren seitens der Kraftfahrzeughersteller verstärkt gesetzten Maßnahmen zur Verminderung der durch den Straßenverkehr verursachten Lärmbelästigung, wie etwa das Anbringen von schalldämmenden Motorkapselungen, hatte zur Folge, daß das Reifen/Fahrbahngeräusch immer mehr zur dominierenden Lärmquelle wurde. Dabei entwickeln LKW-Reifen aus konstruktionsbedingten Gründen ein als störender empfundenes Rollgeräusch als PKW-Reifen. Die am Reifen selbst zur Verminderung der Lärmbelästigung gesetzten Maßnahmen zielten bisher insbesondere darauf ab, das Reifen/Fahrbahngeräusch hinsichtlich einer Verteilung der auftretenden Frequenzen auf ein breiteres Frequenzband zu beeinflussen, was als angenehmer empfunden wird, als eine Schallabstrahlung mit vorherrschenden Frequenzen. Die diesbezüglich am Laufstreifenprofil eines Reifens gesetzten Maßnahmen erschöpften sich im wesentlichen in der Anwendung des Verfahrens der Pitchlängenvariation.

In jüngster Vergangenheit wurden ferner Überlegungen angestellt, in den Radkästen der Kraftfahrzeuge schallabsorbierende Vorrichtungen anzubringen. So ist es beispielsweise aus der DE-C-4 241 518 bekannt, am Radkasten eine Umkleidung anzuordnen, die sich aus Kammern zusammensetzt, die als Helmholtz-Resonatoren ausgebildet sind. Eine solche Vorrichtung wirkt als passiver Schallabsorber und soll den über die Luft übertragenen Anteil des vom Kraftfahrzeug emittierten Reifen/Fahrbahngeräusches reduzieren. Eine weitere, als passiver Schallabsorber wirkende Vorrichtung, die als Lochabsorber ausgeführt ist, ist in der DE-A-4 415 983 der Anmelderin beschrieben. In der DE-A-4 402 699 der Anmelderin ist ferner eine bevorzugt am Radkasten anzubringende Vorrichtung geoffenbart, die ein System von Schallabsorbern aufweist, die auf bestimmte Geräuschanteile im Reifen/Fahrbahngeräusch, deren Frequenzen sich proportional zur Raddrehzahl ändern, abgestimmt ist und aktiv angepaßt werden kann.

Die Wirkung solcher Vorrichtungen beschränkt sich jedoch auf jenen Teil des während des Abrollens des Reifen entstehenden Schallfeldes, das von der räumlichen Ausdehnung der Vorrichtung erfaßt wird.

Hier setzt nun die gegenständliche Erfindung ein, deren Aufgabe darin besteht, am Reifen, insbesondere am Laufstreifenprofil, Maßnahmen zu setzen, die einerseits die Effektivität von passiven oder aktiven schallabsorbierenden Vorrichtungen am Kraftfahrzeug, insbesondere am Radkasten, verbessern helfen und andererseits auch das Reifen/Fahrbahngeräusch, sowohl hinsichtlich des emittierten Frequenzspektrums als auch hinsichtlich des Schalldruckpegels, günstig beeinflussen.

Gelöst wird die gestellte Aufgabe durch die im kennzeichnenden Teil des Anspruches 1 enthaltenen Merkmale.

Von der Bodenaufstandsfläche her betrachtet stellt sich bei einem Reifen mit einem derartigen, erfindungsgemäß gestaltete Laufstreifenprofil während des Abrollens die Situation ein, daß durch den erfindungsgemäßen Verlauf der Hauptrillen der Effekt einer gleichphasigen Schallabstrahlung an den dem Ein- und Auslauf zugewandten und den seitlichen Öffnungen der Profilrillen unterstützt wird. Dabei sind Ausführungen, wo der genannte Winkel zumindest annähernd 30° beträgt, besonders effektiv. Wie bekannt, bilden sich in Profilrillen, die durch den Kontakt mit der Fahrbahn zu Kanälen geschlossen werden, Rillenresonanzen aus. Diese Rillenresonanzen strahlen maximale Schallenergie bei einer der Frequenzen ab, deren zugehörige Wellenlänge 2/(n+1) multipliziert mit der Länge des Kanals entspricht (n = 1). Die Energieverteilung in den angeregten Resonanzen ist abhängig von der Fahrgeschwindigkeit und der Anzahl der Klötze, fahrbahnabhängigen Parametern, wie beispielsweise Rauhtiefe und Porenvolumen des Fahrbahnbelages, und spezifischen Eigenmoden des Reifenaufbaus. Da beide offenen Enden eines solchen Kanals kohärent abstrahlen, bildet sich ein räumliches Interferenzmuster aus mit Abstrahlungsrichtungen mit konstruktiver Interferenz, was einer Schallverstärkung, und destruktiver Interferenz, was einer Schallauslöschung entspricht. Bei einem nach der Erfindung gestalteten Laufstreifenprofil bildet sich das Interferenzmuster etwa derart aus, daß eine Schallabstrahlung vorrangig in und gegen die Fahrtrichtung erfolgt, seitlich des Reifens jedoch eine stark verminderte Schallabstrahlung. Durch die Längsrillen besitzt das erfindungsgemäße Profil gute Abriebs- und Aquaplaningeigenschaften. Um die Längsrillen akustisch möglichst weitgehend zu entkoppeln ist der erfindungsgemäße Versatz von Vorteil, da dadurch eine Koppelung weitgehend ausgeschlossen wird. Durch den Versatz der Längsrillen wird ferner die Energie der aufschlagenden Klötze zeitlich verteilt und einem Ausschnappen der Klötze entgegengewirkt. Die erwähnte Breite der Längsrillen stellt die erwünschten Profileigenschaften sicher und hat den Vorteil, die erzielbare Schallabstrahlungscharakteristik wenig zu beeinflussen.

Bei einer bevorzugten Ausführungsform der Erfindung sind die beiden Laufstreifenbereiche durch eine in Umfangsrichtung umlaufende Umfangsnut voneinander getrennt, in welche die diagonal verlaufenden Rillen von beiden Seiten einmünden, wobei diese Umfangsnut bevorzugt entlang der Umfangsmittellinie des Profiles verläuft. Die Anordnung einer Umfangsnut im Mittelbereich des Laufstreifens unterstützt den oben beschriebenen physikalischen Effekt und ist somit insgesamt günstig für eine Reduzierung der Schallabstrahlung in seitlicher Richtung und einer Bündelung der Schallabstrahlung in bzw. gegen die Fahrtrichtung.

Bei einer weiteren, vorteilhaften Ausführungsvariante enden die in beiden Laufstreifenbereichen verlaufenden Rillen laufstreifeninnenseitig als Sacknuten, wobei die Rillen aus dem einen Laufstreifenbereich mit den Rillen aus dem anderen Laufstreifenbereich nicht in Verbindung treten. Der Mittelbereich des Laufstreifenprofiles ist somit geschlossen gestaltet und hat etwa die Wirkung einer Umfangsrippe. Bezüglich der erwünschten Schallabstrahlungscharakteristik ist diese Ausführungsvariante etwas weniger wirkungsvoll, zeigt aber insbesondere auch eine signifikante Schallpegelreduzierung im Vergleich zu herkömmlichen Traktionsprofilen.

Bei einer weiteren vorteilhaften Ausführungsform sind die in dem einen Laufstreifenbereich verlaufenden Rillen gegensinnig zu jenen im anderen Laufstreifenbereich verlaufenden angeordnet. Bei dieser Variante handelt es sich somit um ein laufrichtungsgebunden und gepfeilt gestaltetes Profil mit gegensinniger Neigung der Rillen. Die erwünschte und erzielbare Schallabstrahlungscharakteristik kann daher günstigerweise mit den Vorteilen eines laufrichtungsgebunden gestalteten Profiles, wie beispielsweise verbessertes Aquaplaningverhalten, verbunden werden.

Bei einer anderen Ausführungsform der Erfindung besitzen die in den beiden Laufstreifenbereichen verlaufenden Rillen übereinstimmenden Verlauf bzw. gleiche Steigung. Eine weitere, vorteilhafte Ausführungsvariante sieht vor, daß die in dem einen Laufstreifenbereich verlaufenden Rillen gegenüber jenen im zweiten Laufstreifenbereich verlaufenden in Umfangsrichtung versetzt sind. Diese Maßnahme hat einen gewissen unterstützenden Effekt auf die mit der gegenständlichen Erfindung erzielbaren Schallabstrahlungscharakteristik.

Der Verlauf, bzw. die Anordnung der Längsrillen kann von der exakten Umfangsrichtung abweichen, was für bestimmte Profileigenschaften, beispielsweise das Traktions- und Bremsverhalten, von Vorteil ist. Um gleichzeitig die gewünschte Schallabstrahlungscharakteristik möglichst weitgehend sicherzustellen ist es günstig, wenn die Längsrillen einen Verlauf besitzen, der um bis zu 10°, insbesondere bis zu 5°, von der Umfangsrichtung abweicht.

Insbesondere auf einen gleichmäßigen Abrieb und gute Aquaplaningeigenschaften wirkt es sich günstig aus, wenn die freien Endbereiche der Rillen bzw. deren Einmündungsbereiche in eine Umfangsnut bzw. deren an den Laufstreifenrändern ausmündende Bereiche leicht bogenförmig gekrümmt sind.

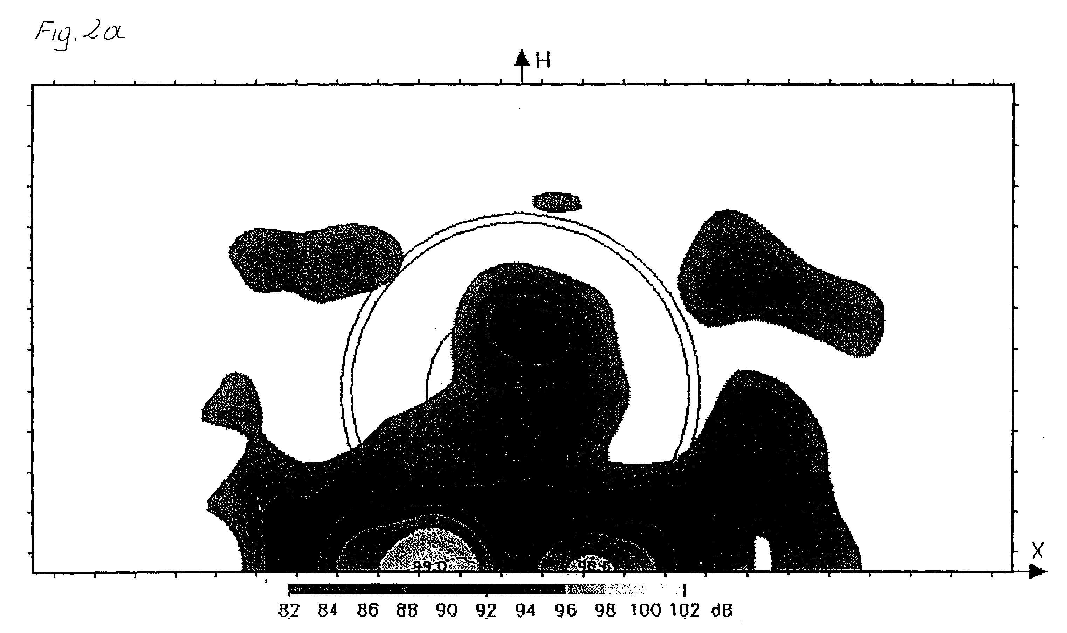

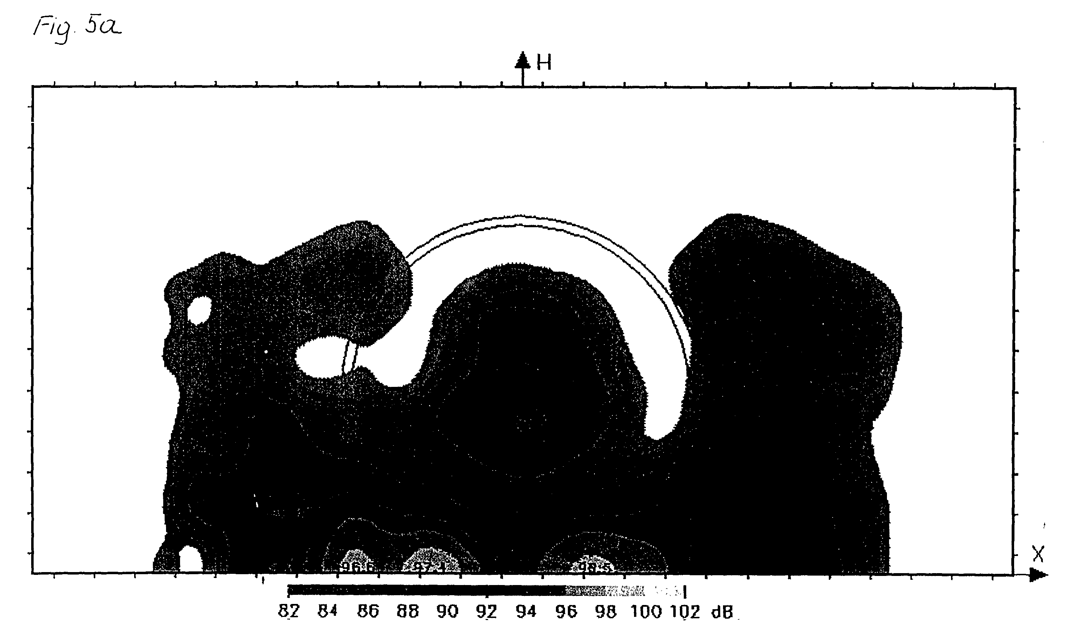

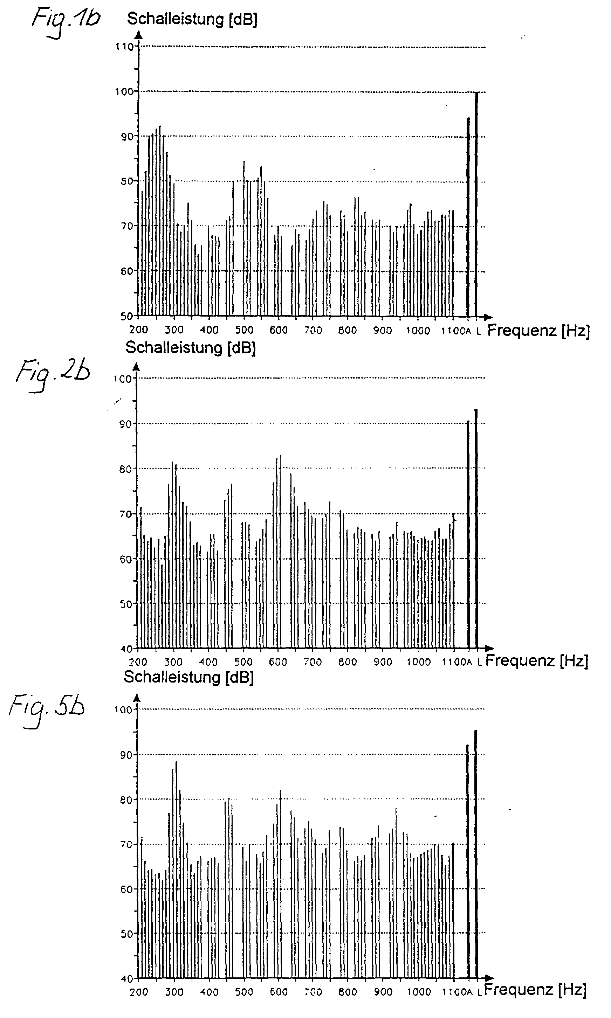

Weitere Merkmale, Vorteile und Einzelheiten der Erfindung werden nun anhand der Zeichnung, die mehrere Ausführungsbeispiele darstellt, näher beschrieben. Dabei zeigen die Fig. 2 bis 7 Draufsichten auf Teilabwicklungen unterschiedlicher Ausführungsvarianten von Laufstreifenprofilen, die jeweils prinzipielle Ausgestaltungsmöglichkeiten sind, Fig. 1 einen verkleinerten Latschabdruck eines Laufstreifenprofiles eines Reifens aus dem Stand der Technik, Fig. 1a, 2a und 5a Abbildungen von Schallfeldmessungen und Fig. 1b, 2b und 5b zugehörige gemessene Frequenzspektren

Die erfindungsgemäß gestalteten Laufstreifenprofile sind insbesondere für Triebachsreifen von LKWs vorgesehen. Der sonstige Aufbau der LKW-Reifen kann in herkömmlicher Art und Weise erfolgen und umfaßt insbesondere neben dem Laufstreifen ein Paar von Wulstbereichen mit Wulstkernen, ein Paar von Seitenwänden, eine Radialkarkasse, deren freie Enden um die Wulstkerne herumgeführt sind, und einen mehrlagigen Gürtel. Als Verstärkungskord für die ein- oder mehrlagige Karkasse kommt im allgemeinen Stahlkord in Frage, ferner auch organische Faser, wie beispielsweise Nylon oder Polyester oder auch ein aromatisches Polyamid. Der Gürtel umfaßt drei bis vier Lagen, die in jeder Lage parallel zueinander verlaufende Korde aus Stahl oder ebenfalls organischen Faserkord aufweisen, die bezüglich des Reifenäquators unter bestimmten Winkeln verlaufen.

Die vorliegende Erfindung befaßt sich grundsätzlich damit, Laufstreifenprofile für Reifen derart zu gestalten, daß einerseits das Reifen/Fahrbahngeräusch sowohl bezüglich Schalldruckpegel als auch Verteilung der auftretenden Frequenzen insgesamt günstig beeinflußt wird und andererseits eine in und gegen die die Fahrtrichtung (Abrollrichtung) des Reifens möglich weitgehend gerichtete Schallabstrahlung und eine Reduzierung der Schallabstrahlung in seitlicher Richtung unterstützt wird. Dadurch soll der erfindungsgemäße Reifen vor allem an Kraftfahrzeugen, vor allem an LKW oder Bussen, einsetzbar sein, die an den Radkästen mit geeigneten Vorrichtungen zur Schallabsorbtion versehen sind. Die zur Erreichung dieses Zieles gesetzten Maßnahmen werden nun anhand der grundsätzlichen Ausführungsvarianten näher erläutert. Dabei werden die in den Zeichnungsfiguren 2 bis 7 dargestellten Laufstreifenprofile jeweils über ihre Breite B, die der Breite in der Bodenaufstandsfläche gemäß E.T.R.T.O. Standards Manual entspricht, betrachtet.

Bei der Ausführungsform gemäß Fig. 2 handelt es sich um ein gepfeiltes, laufrichtungsgebundenes Laufstreifenprofil. Dabei ist entlang der Reifenumfangsmittellinie A-A eine breite Umfangsnut 2 angeordnet, die, wie dargestellt, als gerade umlaufende Nut gestaltet sein kann. In jeder Laufstreifenhälfte sind als Hauptrillen breite, diagonal verlaufende Rillen 10 angeordnet, die bei diesem Ausführungsbeispiel, bis auf den Bereich ihrer Einmündungen in die Umfangsnut 2 bzw. ihrer Übergangsbereiche an den Laufstreifenrändem, wo die Rillen 10 jeweils in Querrichtung des Laufstreifenprofils gebogene Endabschnitte aufweisen, zumindest im wesentlichen geradlinig verlaufen. Die in der einen Laufstreifenhälfte verlaufenden Rillen 10 sind durch die gepfeilte Anordnung zu den in der anderen Laufstreifenhälfte verlaufenden Rillen 10 gegenseitig geneigt und schließen mit der Umfangsmittellinie A-A einen Winkel α ein, der zwischen 35 +/- 20°, insbesondere zwischen 35 +/- 10°, gewählt wird. In Umfangsrichtung betrachtet sind die Rillen 10 in der einen Laufstreifenhälfte gegenüber den Rillen 10 in der zweiten Laufstreifenhälfte versetzt angeordnet. Dieser Versatz kann bis zum halben gegenseitigen Abstand benachbarter Rillen 10 durchgeführt werden. Die Anordnung eines solchen Reifens am Fahrzeug erfolgt derart, daß die laufstreifeninnenseitigen Endbereiche der Rillen 10 zuerst in die Kontaktfläche mit dem Untergrund eintreten.

Darüber hinaus sind die Rillen 10 in jeder Laufstreifenhälfte durch relativ schmale, zumindest im wesentlichen in Umfangsrichtung verlaufende Längsrillen 3 miteinander verbunden, wodurch eine Klotzstruktur entsteht. Die mittlere Breite der schmalen Längsrillen 3 wird zwischen 10 und 60 %, insbesondere 20 bis 40 %, der Breite der Rillen 10 gewählt. Der Verlauf der Längsrillen 3 kann um +/- 10°, insbesondere +/- 5°, von der Umfangsrichtung abweichen.

Durch die schmalen Längsrillen 3 werden die breiten Rillen 10 akustisch gekoppelt. Es ist daher vorteilhaft, die Längsrillen 3 gegeneinander in Reifenquerrichtung zu versetzen, sodaß keine fluchtende Anordnung von Längsrillen 3 gegeben ist. Durch den Versatz der Längsrillen 3 entsteht eine Klotzstruktur, bei der sich die Anzahl der Klötze 4 zwischen benachbarten Rillen 10 voneinander unterscheidet, sodaß beim dargestellten Ausführungsbeispiel in jeder Laufstreifenhälfte zwischen benachbarten Rillen 10 abwechselnd jeweils drei Klötze 4 und vier Klötze 4 vorliegen.

Diese Profilgestaltung besitzt durch die Längsrillen 3 gute Abriebs- und Aquaplaningeigenschaften. Dabei ist gleichzeitig sichergestellt, daß eine in und gegen die Fahrtrichtung gerichteten Schallabstrahlung und eine Reduktion der seitlichen Schallabstrahlung erzielt wird.

Der geschilderte Versatz der Längsrillen 3 bewirkt zusätzlich, daß während des Abrollens des Reifens die Energie der am Untergrund anschlagenden Klötze zeitlich verteilt wird, was sich insgesamt günstig auf den Schalldruckpegel auswirkt.

Bei dieser Variante kann auf den dargestellten Versatz der in der einen Laufstreifenhälfte verlaufenden Rillen 10 gegenüber jenen in der anderen Laufstreifenhälfte verlaufenden Rillen 10 verzichtet werden, sodaß die Rillen 10 in die Umfangsnut 2 ohne gegenseitigen Versatz einmünden.

Das Laufstreifenprofil wird derart ausgelegt, daß, in Querrichtung des Profiles betrachtet, die Anzahl der Rillen 10 je nach Reifendimension zwischen 6 und 12, insbesondere zwischen 8 und 10, beträgt, Die mittlere Rillenbreite errechnet sich bei gegebener Reifenbreite (Breite des Reifens gemäß den maximalen Reifenbetriebsmaßen aus E.T.R.T.O. Standards) in mm aus Rillenbreite = √B / y² mit B als Reifenbreite und mit 1,4 ≤ y ≤ 2,6, insbesondere 1,6 ≤ y ≤ 2,1, wobei die Reifenbreite als dimensionslose Zahl eingeht. Die Breite der Rillen 10 wird zumindest im wesentlichen konstant gehalten, wobei insbesondere sämtliche Rillen 10 die gleiche Breite besitzen. Der Querschnitt der Rillen 10 kann U-förmig, V-förmig oder dergleichen, symmetrisch oder asymmetrisch, gestaltet werden. Zusätzlich können an sich bekannte Maßnahmen zur Steinabweisung getroffen werden, etwa Grundanhebungen am Rillengrund.

Die in Umfangsrichtung verlaufende Umfangsnut 2 kann abweichend von der dargestellten Ausführungsform auch wellen- oder zick-zack-förmig gestaltet werden.

Von Vorteil ist es darüber hinaus, wenn der Anteil an breiten Rillen 10, Längsrillen 3 und weiteren, den Negativanteil vermindernden Maßnahmen wie beispielsweise Anschrägungen von Klötzen und dergleichen so gewählt wird, daß insgesamt ein Negativanteil von 20 bis 40 %, bezogen auf die Gesamtfläche in der Bodenaufstandsfläche, entsteht.

Fig. 3 zeigt ein Variante des in Fig. 2 dargestellten Ausführungsbeispieles, bei dem neben einer mittleren Umfangsnut 2' in jeder Laufstreifenhälfte Rillen 10' angeordnet sind, die jeweils über einen Großteil ihrer Längen übereinstimmende Steigung besitzen. Demnach ist diese Profilvariante nicht laufrichtungsgebunden. Die Mündungsbereiche der Rillen 10', und zwar sowohl im Bereich der Umfangsnut 2' als auch an den Laufstreifenrändern sind wiederum derart gestaltet, daß die Rillen 10' jeweils über eine gerundete Knickstelle in der Mitte in die Umfangsnut 2' einmünden bzw. am Laufstreifenrand in die Schulterbereiche hinauslaufen. Die weitere Ausgestaltung des Profiles mit Längsrillen 3' entspricht jener gemäß Fig. 2, ebenso wie die Winkelung der Rillen 10' und deren sonstige Ausgestaltung.

Das in Fig. 4 dargestellte Ausführungsbeispiel unterscheidet sich von jenem gemäß Fig. 3 lediglich dadurch, daß die Rillen 10" in der einen Laufstreifenhälfte gegenüber den Rillen 10" in der anderen Laufstreifenhälfte in Umfangsrichtung versetzt sind. Die Längsrillen 3" sind analog vorgesehen.

Fig. 5 bis Fig. 7 zeigen weitere Ausführungsbeispiele, die weitere Varianten der in den Fig. 2 bis 4 dargestellten Beispiele sind.

So entspricht das Ausführungsbeispiel in Fig. 5 bis auf die Gestaltung des Mittelbereiches jenem gemäß Fig. 2. Es sind demnach bei dieser Ausführungsvariante, wie schon beschrieben, in jeder Laufstreifenhälfte Rillen 10^{III}, Längsrillen 3^{III}, jeweils mit entsprechender Winkelung und entsprechendem Versatz, angeordnet. Im Laufstreifenmittelbereich ist nun keine Umfangsnut vorgesehen, sodaß die Rillen 10^{III} dort als Sacknuten, bevorzugt und wie dargestellt unter Bildung einer abgerundeten Knickstelle an den jeweiligen Enden, enden. Der Laufstreifenmittelbereich ist somit geschlossener gestaltet als bei den Ausführungsvarianten gemäß Fig. 2 bis Fig. 4, was eine gewisse Verminderung der Effektivität des dieser Ausführungsformen zugrundeliegenden physikalischen Wirkungsprinzips zur Folge hat. Die geschlossenen Rillen 10^{III} emittieren etwas mehr Geräusch, eine gegenseitige Auslöschung ist hauptsächlich im Ein- und Auslauf möglich. Trotzdem ist eine noch immer signifikante Schalldruckpegelreduzierung im Vergleich zu herkömmlichen Profilen feststellbar. Der Vorteil dieser Profilgestaltung liegt vor allem darin, daß im Mittelbereich des Laufstreifens durch den dortigen Auslauf der Rillen 10^{III} eine Rippenstruktur entsteht, die das Abriebsverhalten wesentlich verbessert.

Fig. 6 zeigt eine der Fig. 4 im wesentlichen entsprechenden Variante, die demnach in beiden Laufstreifenhälften gleichsteigende Rillen 10^{IV} aufweist, der Mittelbereich des Laufstreifenprofiles ist analog zur Variante gemäß Fig. 4 gestaltet, wobei kein Versatz der in der einen Laufstreifenhälfte verlaufenden Rillen 10^{IV} gegenüber jenen der in der zweiten Laufstreifenhälfte verlaufenden Rillen 10^{IV} vorliegt.

Eine Variante mit Versatz der Rillen 10^{V} in der einen Laufstreifenhälfte gegenüber den Rillen 10^{V} in der zweiten Laufstreifenhälfte ist in Fig. 7 dargestellt. Die sonstige Ausgestaltung der in den Fig. 6 und Fig. 7 dargestellten Varianten entspricht grundsätzlich jener gemäß Fig. 5.

Bei sämtlichen Varianten können zusätzlich zu den dargestellten bzw. beschriebenen Rillen und Nuten Lamellenfeineinschnitte, schmale, zusätzliche Einschnitte und dergleichen vorgesehen werden.

Darüber hinaus ist es möglich, durch sogenannte Grundanhebungen in den Rillen und den Längsrillen, Anbindungen von Klötzen aneinander vorzunehmen, was für die Profilstabilität von Vorteil ist.

Bei sämtlichen Ausführungsvarianten kann eine Pitchlängenvariation, die aus dem Stand der Technik hinlänglich bekannt ist, vorgenommen werden.

Fig. 1a, 1b, 2a, 2b und 5a, 5b veranschaulichen anhand von Abbildungen von gemessenen Schallfeldern und ermittelten Frequenzspektren die Wirksamkeit der gegenständlichen Erfindung. Fig. 1a, 2a und 5a zeigen in graukodierten, dreidimensionalen Darstellungen die vom Reifen in seitliche Richtung, durch eine Ebene parallel zur Reifenlaufrichtung, senkrecht zum Boden und in ca. 20 cm seitlicher Entfernung von der Reifenseitenwand abgestrahlte Schallintensität bzw. Schalleistung. Die Messungen erfolgten auf einem Trommelprüfstand bei einer Geschwindigkeit von 70 km/h. In den Darstellungen sind die Abmessungen des Reifens, der Felge und der Trommel, auf der der Reifen abläuft, skizziert. Die Strichmarkierungen am die Darstellungen umschließenden Rechteck zeigen das Meßgitter. An jedem Kreuzungspunkt der diese Markierungen verbindenden senkrechten und waagrechten Linie wurde die Schallintensität senkrecht zur Zeichnungsebene bestimmt und als Grauwert dargestellt. Die Skala am Fuße der Darstellungen zeigt jeweils die jeder Graustufe zugeordnete Schalleistung in dB.

Fig. 1a erzeigt nun die Ausdehnung und Art des von der Seite gemessenen Schallfeldes eines LKW-Reifens mit einem nach dem Stand der Technik ausgeführten Traktionsprofil. Der gemessene Reifen hatte die in Fig. 1 dargestellte Profilausgestaltung mit einer ausgeprägten Klotzstruktur. Wie aus der Darstellung ersichtlich ist, ist das Schallfeld dieses bekannten Reifens deutlich ausgebreitet mit der durch die verschiedenen Graustufen gekennzeichneten Intensitätsverteilung. Das in Fig. 1 b dargestellte Frequenzspektrum zeigt ausgeprägte Spitzen in bestimmten Frequenzbereichen und einen hohen Schalldruckpegel.

Das mit einem Reifen, dessen Profil gemäß Fig. 2 ausgerüstet war, gemessene Schallfeld ist in Fig. 2a dargestellt. Die Schallabstrahlung in seitlicher Richtung ist deutlich reduziert. Das Frequenzspektrum (Fig. 2b) zeigt weniger ausgeprägte Spitzen und eine wesentlich herabgesetzte Schalleistung.

Weiters wurde das Schallfeld eines Reifens mit einem Profil, welches gemäß Fig. 5 gestaltet war, ermittelt. Auch hier ist zu sehen, daß die erwünschten Effekte einer Reduzierung der Ausbreitung des Schallfeldes und einer Reduzierung der Schallintensität bzw. Schalleistung erzielt wurden. Auch das Frequenzspektrum (Fig. 5b) zeigt eine herabgesetzte Schalleistung und eine Vergleichmäßigung bezüglich der Frequenzspitzen.

Bei sämtlichen dargestellten Ausführungsvarianten ist das Profil durch die Umfangsmittellinie in zwei Laufstreifenbereiche gegliedert, die somit die beiden Laufstreifenhälften sind. Davon abweichend kann eine Gliederung des Profiles auch in Laufstreifenbereiche erfolgen, die nicht die beiden Laufstreifenhälften sind, indem beispielsweise die Umfangsnut gegenüber der Umfangsmittellinie versetzt angeordnet wird. Es ergeben sich dadurch asymmetrische Profilausgestaltungen, die ebenfalls im Rahmen der gegenständlichen Erfindung liegen.

## Patentansprüche

1. Radialreifen, insbesondere für die Antriebsräder von Lastkraftwagen oder Bussen, mit einem Laufstreifenprofil, welches eine Klotzstruktur besitzt, die von diagonal über zumindest einen Teil des Laufstreifens verlaufenden Rillen (10, 10^{I}, 10^{II}, 10^{III}, 10^{IV}, 10^{V}) und von zumindest im wesentlichen in Umfangsrichtung verlaufenden Längsrillen (3, 3^{I}, 3^{II}, 3^{III}) gebildet wird, die zur Bildung der Klotzstruktur zwischen jeweils zwei in Umfangsrichtung benachbarten Rillen (10, 10^{I}, 10^{II}, 10^{III}, 10^{IV}, 10^{V}) verlaufen und, für in Umfangsrichtung benachbarte Rillen (10, 10^{I}, 10^{II}, 10^{III}, 10^{IV}, 10^{V}) betrachtet, jeweils in Querrichtung gegeneinander versetzt sind, dadurch gekennzeichnet, daß sich das Laufstreifenprofil aus zwei Laufstreifenbereichen zusammensetzt, in welchen sich jeweils die diagonal verlaufenden Rillen (10, 10^{I}, 10^{II}, 10^{III}, 10^{IV}, 10^{V}) als Hauptrillen über zumindest einen Großteil der Breite des betreffenden Laufstreifenbereiches unter einem Winkel (α) von 35 +/- 20°, insbesondere 35 +/- 10°, zur Umfangsrichtung erstrecken, wobei die Breite der Längsrillen (3, 3^{I}, 3^{II}, 3^{III}) geringer ist als die Breite der diagonal verlaufenden Rillen (10, 10^{I}, 10^{II}, 10^{III}, 10^{IV}, 10^{V}) und mindestens 10 %, insbesondere mindestens 20 %, und höchstens 60 %, insbesondere höchstens 50 %, der Breite der Rillen (10, 10^{I}, 10^{II}, 10^{III}, 10^{IV}, 10^{V}) entspricht.

2. Radialreifen nach Anspruch 1, dadurch gekennzeichnet, daß die beiden Laufstreifenbereiche durch eine in Umfangsrichtung umlaufende Umfangsnut (2, 2^{I}) voneinander getrennt sind, in welche die diagonal verlaufenden Rillen (10, 10^{I}, 10^{II}) von beiden Seiten einmünden, wobei diese Umfangsnut (2, 2^{I}) bevorzugt entlang der Umfangsmittellinie (A-A) des Profiles verläuft.

3. Radialreifen nach Anspruch 1 oder 2, dadurch gekennzeichnet, daß die in beiden Laufstreifenbereichen verlaufenden Rillen (10^{III}, 10^{IV}, 10^{V}) laufstreifeninnenseitig als Sacknuten enden, wobei die Rillen (10^{III}, 10^{IV}, 10^{V}) aus dem einen Laufstreifenbereich mit den Rillen (10^{III}, 10^{IV}, 10^{V}) aus dem anderen Laufstreifenbereich nicht in Verbindung treten.

4. Radialreifen nach einem der Ansprüche 1 bis 3, dadurch gekennzeichnet, daß die in dem einen Laufstreifenbereich verlaufenden Rillen (10, 10^{III}) gegensinnig zu jenen im anderen Laufstreifenbereich verlaufenden angeordnet sind.

5. Radialreifen nach einem der Ansprüche 1 bis 3, dadurch gekennzeichnet, daß die in den beiden Laufstreifenbereichen verlaufenden Rillen (10^{I}, 10^{II}, 10^{IV}, 10^{V}) übereinstimmenden Verlauf bzw. gleiche Steigung besitzen.

6. Radialreifen nach einem der Ansprüche 1 bis 5, dadurch gekennzeichnet, daß die in dem einen Laufstreifenbereich verlaufenden Rillen (10, 10^{II}, 10^{III}, 10^{V}) gegenüber jenen im zweiten Laufstreifenbereich verlaufenden in Umfangsrichtung versetzt sind.

7. Radialreifen nach einem der Ansprüche 1 bis 6, dadurch gekennzeichnet, daß die Längsrillen (3, 3^{I}) einen Verlauf besitzen, der um bis zu 10°, insbesondere bis zu 5° von der Umfangsrichtung abweicht.

8. Radialreifen nach einem der Ansprüche 1 bis 7, dadurch gekennzeichnet, daß die freien Endbereiche der Rillen (10, 10^{I}, 10^{II}, 10^{III}, 10^{IV}, 10^{V}) bzw. deren Einmündungsbereiche in eine Umfangsnut bzw. deren an den Laufstreifenrändern ausmündende Bereiche leicht bogenförmig gekrümmt sind.

9. Radialreifen nach einem der Ansprüche 1 bis 8, dadurch gekennzeichnet, daß die Breite der Rillen (10, 10^{I}, 10^{II}, 10^{III}, 10^{IV}, 10^{V}) in mm ermittelt wird aus:
Rillenbreite = √B / y², mit B als Reifenbreite und mit 1,4 ≤ y ≤ 2,6, insbesondere 1,6 ≤ y ≤ 2,1, wobei die Reifenbreite in Millimeter bestimmt wird und in die Berechnung der Rillenbreite als dimensionslose Zahl eingeht.

10. Radialreifen nach einem der Ansprüche 1 bis 9, dadurch gekennzeichnet, daß die Rillen (10, 10^{I}, 10^{II}, 10^{III}, 10^{IV}, 10^{V}) über ihren Verlauf eine konstante Breite besitzen, die vorzugsweise bei sämtlichen Rillen (10, 10', 10^{II}, 10^{III}, 10^{IV}, 10^{V}) übereinstimmt.

11. Radialreifen nach einem der Ansprüche 1 bis 10, dadurch gekennzeichnet, daß, in Querrichtung des Profils betrachtet, die Anzahl der Rillen (10, 10^{I}, 10^{II}, 10^{III}, 10^{IV}, 10^{V}) zwischen 6 und 12, insbesondere zwischen 8 und 10, beträgt.

## Claims

1. Radial tyre, more especially for the driving wheels of lorries or buses, including a tread strip profile which has a block structure, which is formed from notches (10, 10^{I}, 10^{II}, 10^{III}, 10^{IV}, 10^{V}), which extend diagonally over at least a portion of the tread strip, and from longitudinal notches (3, 3^{I}, 3^{II}, 3^{III}) which extend at least substantially in the circumferential direction, said longitudinal notches extending between two respective notches (10, 10^{I}, 10^{II}, 10^{III}, 10^{IV}, 10^{V}), which lie adjacent each other when viewed with respect to the circumferential direction, to form the block structure and being offset from each other, when viewed with respect to the transverse direction, allowing for notches (10, 10^{I}, 10^{II}, 10^{III}, 10^{IV}, 10^{V}) which lie adjacent one another when viewed with respect to the circumferential direction, characterised in that the tread strip profile comprises two tread strip regions, in each of which the diagonally extending notches (10, 10^{I}, 10^{II}, 10^{III}, 10^{IV}, 10^{V}) extend as the main notches over at least a large portion of the width of the pertinent tread strip region at an angle (α) of 35 +/- 20°, more especially 35 +/- 10°, relative to the circumferential direction, the width of the longitudinal notches (3, 3^{I}, 3^{II}, 3^{III}) being smaller than the width of the diagonally extending notches (10, 10^{I}, 10^{II}, 10^{III}, 10^{IV}, 10^{V}) and corrresponding to at least 10 %, more especially at least 20 %, and at most 60 %, more especially at most 50 %, of the width of the notches (10, 10^{I}, 10^{II}, 10^{III}, 10^{IV}, 10^{V}).

2. Radial tyre according to claim 1, characterised in that the two tread strip regions are separated from each other by a circumferential groove (2, 2^{I}), which extend in the circumferential direction, and in which the diagonally extending notches (10, 10^{I}, 10^{II}) terminate from both sides, this circumferential groove (2, 2^{I}) preferably extending along the central circumferential line (A-A) of the profile.

3. Radial tyre according to claim 1 or 2, characterised in that the notches (10^{III}, 10^{IV}, 10^{V}), which extend in both tread strip regions, terminate as blind grooves on the inside of the tread strip, the notches (10^{III}, 10^{IV}, 10^{V}) from one tread strip region not communicating with the notches (10^{III}, 10^{IV}, 10^{V}) from the other tread strip region.

4. Radial tyre according to one of claims 1 to 3, characterised in that the notches (10, 10^{III}), which extend in one tread strip region, are disposed in the opposite direction to those notches extending in the other tread strip region.

5. Radial tyre according to one of claims 1 to 3, characterised in that the notches (10^{I}, 10^{II}, 10^{IV}, 10^{V}), which extend in the two tread strip regions, have identical configurations or resp. identical pitches.

6. Radial tyre according to one of claims 1 to 5, characterised in that the notches (10, 10^{II}, 10^{III}, 10^{V}), which extend in one tread strip region, are offset from those notches, which extend in the second tread strip region, when viewed with respect to the circumferential direction.

7. Radial tyre according to one of claims 1 to 6, characterised in that the longitudinal notches (3, 3^{I}) have a configuration which deviates from the circumferential direction by up to 10°, more especially up to 5°.

8. Radial tyre according to one of claims 1 to 7, characterised in that the free end regions of the notches (10, 10^{I}, 10^{II}, 10^{III}, 10^{IV}, 10^{V}), or resp. the transitional regions thereof leading to a circumferential groove, or resp. the regions thereof which terminate at the tread strip edges, are curved in a slightly arcuate manner.

9. Radial tyre according to one of claims 1 to 8, characterised in that the width of the notches (10, 10^{I}, 10^{II}, 10^{III}, 10^{IV}, 10^{V}) is ascertained in mm from: notch width = √B / y², with B as the tyre width and with 1.4 ≤ y ≤ 2.6, more especially 1.6 ≤ y ≤ 2.1, the tyre width being determined in millimetres and entering the calculation of the notch width as a dimensionless number.

10. Radial tyre according to one of claims 1 to 9, characterised in that the notches (10, 10^{I}, 10^{II}, 10^{III}, 10^{IV}, 10^{V}) have, over their configuration, a constant width which is preferably identical for all of the notches (10, 10^{I}, 10^{II}, 10^{III}, 10^{IV}, 10^{V}).

11. Radial tyre according to one of claims 1 to 10, characterised in that, when viewed with respect to the transverse direction of the profile, the number of notches (10, 10^{I}, 10^{II}, 10^{III}, 10^{IV}, 10^{V}) is between 6 and 12, more especially between 8 and 10.

## Revendications

1. Pneumatique radial, en particulier pour les roues motrices d'un camion ou d'un autobus, présentant un profil de bande de roulement qui possède une structure de blocs qui est formée par des cannelures (10, 10^{I}, 10^{II}, 10^{III}, 10^{IV}, 10^{V}) orientées diagonalement sur au moins une partie de la bande de roulement et de cannelures longitudinales (3, 3', 3'', 3''') qui sont orientées au moins sensiblement selon la direction périphérique, qui, pour former la structure de blocs, courent chacune entre deux cannelures (10, 10^{I}, 10^{II}, 10^{III}, 10^{IV}, 10^{V}) voisines selon la direction périphérique et qui, vu pour des cannelures (10, 10^{I}, 10^{II}, 10^{III}, 10^{IV}, 10^{V}) voisines selon la direction périphérique, sont chacune décalées l'une par rapport à l'autre selon la direction transversale, caractérisé par le fait que le profil de la bande de roulement se compose de deux zones de bande de roulement dans chacune desquelles les cannelures (10, 10^{I}, 10^{II}, 10^{III}, 10^{IV}, 10^{V}) orientées diagonalement s'étendent, en tant que cannelures principales, sur au moins une grande partie de la largeur de la zone de bande de roulement en question, sous un angle (α) de 35 +/- 20°, en particulier 35 +/- 10°, par rapport à la direction périphérique, la largeur des cannelures longitudinales (3, 3', 3'', 3''') étant inférieure à la largeur des cannelures (10, 10^{I}, 10^{II}, 10^{III}, 10^{IV}, 10^{V}) orientées diagonalement et correspondant au moins à 10 %, en particulier au moins 20 % et au plus à 60 %, en particulier au plus à 50 % de la largeur des cannelures (10, 10^{I}, 10^{II}, 10^{III}, 10^{IV}, 10^{V}).

2. Pneumatique radial selon la revendication 1, caractérisé par le fait que les deux zones de la bande de roulement sont séparées l'une de l'autre par une rainure périphérique (2, 2') qui fait le tour du pneumatique selon la direction périphérique et dans laquelle les cannelures(10, 10^{I}, 10^{II}) orientées diagonalement débouchent des deux côtés, cette rainure périphérique (2, 2') courant de préférence le long de l'axe périphérique (A-A) du profil.

3. Pneumatique radial selon la revendication 1 ou 2, caractérisé par le fait que les cannelures (10^{III}, 10^{IV}, 10^{V}) courant dans les deux zones de la bande de roulement se terminent, du côté intérieur de la bande de roulement, sous forme de rainures non débouchantes, les cannelures (10^{III}, 10^{IV}, 10^{V}) de l'une des zones de la bande de roulement n'étant pas reliées avec les cannelures (10^{III}, 10^{IV}, 10^{V}) de l'autre zone de la bande de roulement.

4. Pneumatique radial selon l'une des revendications 1 à 3, caractérisé par le fait que les cannelures (10, 10^{III}) courant dans l'une des zones de la bande de roulement sont disposées en sens inverse de celles courant dans l'autre zone de la bande de roulement.

5. Pneumatique radial selon l'une des revendications 1 à 3, caractérisé par le fait que les cannelures (10, 10^{I}, 10^{II}, 10^{IV}, 10^{V}) courant dans les deux zones de la bande de roulement possèdent une allure en coïncidence ou une pente identique.

6. Pneumatique radial selon l'une des revendications 1 à 5, caractérisé par le fait que les cannelures (10, 10^{I}, 10^{II}, 10^{IV}, 10^{V}) courant dans l'une des zones de la bande de roulement sont décalées selon la direction périphérique par rapport à celles courant dans l'autre zone de la bande de roulement.

7. Pneumatique radial selon l'une des revendications 1 à 6, caractérisé par le fait que les cannelures longitudinales '3, 3') possèdent une allure qui s'écarte de jusqu'à 10°, en particulier jusqu'à 5°, de la direction périphérique.

8. Pneumatique radial selon l'une des revendications 1 à 7, caractérisé par le fait que les zones d'extrémité libres des cannelures (10, 10^{I}, 10^{II}, 10^{III}, 10^{IV}, 10^{V}) ou leurs zones dans lesquelles elles débouchent dans la rainure périphérique ou leurs zones dans lesquelles elles débouchent sur les bords de la bande de roulement sont légèrement incurvées en forme d'arc.

9. Pneumatique radial selon l'une des revendications 1 à 8, caractérisé par le fait que la largeur des cannelures (10, 10^{I}, 10^{II}, 10^{III}, 10^{IV}, 10^{V}) en mm se détermine à partir de : largeur de la cannelure = √ B/y² avec B comme largeur du pneumatique et avec 1,4 ≤ y ≤ 2,6, en particulier 1,6 ≤ y ≤ 2,1, la largeur du pneumatique étant déterminée en millimètres et intervenant dans le calcul de la largeur des cannelures sous forme d'un nombre sans dimension.

10. Pneumatique radial selon l'une des revendications 1 à 9, caractérisé par le fait que les cannelures (10, 10^{I}, 10^{II}, 10^{III}, 10^{IV}, 10^{V}) possèdent sur leur parcours une largeur constante qui de préférence coïncide pour toutes les cannelures (10, 10^{I}, 10^{II}, 10^{III}, 10^{IV}, 10^{V}).

11. Pneumatique radial selon l'une des revendications 1 à 10, caractérisé par le fait que, vu selon la direction transversale du profil, le nombre des cannelures (10, 10^{I}, 10^{II}, 10^{III}, 10^{IV}, 10^{V}) vaut entre 6 et 12, en particulier entre 8 et 10.
